# EUROPÄISCHE PATENTSCHRIFT

(11) **EP 3 289 247 B1**
(45) Veröffentlichungstag und Bekanntmachung des Hinweises auf die Patenterteilung: **15.01.2020**
(21) Anmeldenummer: 16708681.8
(22) Anmeldetag: 09.03.2016
(51) Int. Cl.: F16H 63/50

(54) **GETRIEBE-SCHALTASSISTENZVORRICHTUNG SOWIE SCHALTEINRICHTUNG FÜR EIN MOTORRAD**
TRANSMISSION SHIFTING ASSISTANCE DEVICE AND SHIFTING DEVICE FOR A MOTORCYCLE
DISPOSITIF D'ASSISTANCE AU CHANGEMENT DE VITESSES POUR BOÎTE DE VITESSES ET DISPOSITIF DE CHANGEMENT DE VITESSES POUR MOTOCYCLETTE

(30) Priorität: 29.04.2015 DE 102015207906
(43) Veröffentlichungstag der Anmeldung: 07.03.2018
(73) Patentinhaber: Bayerische Motoren Werke Aktiengesellschaft, 80809 München (DE)
(72) Erfinder: PITZER, Norbert, 85757 Karlsfeld (DE); RÖHRIG, Berndt, 82223 Eichenau (DE)
(86) Internationale Anmeldenummer: PCT/EP2016/054966
(87) Internationale Veröffentlichungsnummer: WO 2016/173753

(56) Entgegenhaltungen:
- EP-A1- 1 975 472
- EP-A2- 2 068 044
- WO-A1-2007/064221
- DE-A1-102010 015 037
- DE-A1-102012 111 908
- US-A- 3 122 936

## Beschreibung

Die Erfindung betrifft eine Getriebe-Schaltassistenzvorrichtung, insbesondere für ein Motorrad, die dazu ausgebildet ist, einen Schaltwunsch des Fahrers über eine Sensoreinrichtung zu erfassen und ein entsprechendes elektronisches Signal an eine Motorsteuerung bzw. eine Motorelektronik zu übermitteln, mit einem Gehäuse, einem im Gehäuse angeordneten Kolben sowie wenigstens einer im Gehäuse vorgesehenen Druckfeder, wobei der Kolben unter Kompression wenigstens einer Druckfeder relativ zum Gehäuse verschieblich ist. Ferner betrifft die Erfindung eine Schalteinrichtung für ein Motorrad mit einer solchen Getriebe-Schaltassistenzvorrichtung.

Eine gattungsgemäße Getriebe-Schaltassistenzvorrichtung ist z.B. aus der DE 10 2010 015 037 A1 bekannt und ermöglicht, insbesondere bei sehr sportlichen Motorrädern, dem Fahrer ein schnelles Schalten ohne Betätigung der Kupplung. Hierzu wird die auch als Schaltassistent bezeichnete Vorrichtung zwischen einem Fußschalthebel der Schalteinrichtung und dem Getriebeeingang angeordnet. Bekanntermaßen wird zum Schalten von einem aktuellen Gang in den nächsthöheren Gang der Fußschalthebel nach oben gezogen, während durch Drücken des Schalthebels nach unten sequentiell in niedrigere Gänge geschaltet wird. Die zwischen dem Fußschalthebel und dem Schalteingang des Getriebes angeordnete Getriebe-Schaltassistenzvorrichtung erfasst dabei die vom Fuß des Fahrers ausgeübte Schaltkraft, indem eine Relativverschiebung zwischen Kolben und Gehäuse, die bei entsprechender Kompression der das Kraftniveau vorgebenden Druckfeder erfolgt, durch einen Wegesensor registriert wird. Überschreitet dabei der Verschiebeweg einen vorgegebenen Wert, so wird dies von einer Motorelektronik erkannt und als Schaltwunsch des Fahrers interpretiert. Daraufhin wird kurzzeitig das Antriebsmoment des Motors abgesenkt bzw. die Zündung unterbrochen, was ein Schalten ohne Betätigung der Kupplung bzw. sogar ohne Loslassen des Gashebels ermöglicht. Unmittelbar nach erfolgter Schaltung wird das Motordrehmoment in Bruchteilen einer Sekunde wieder angehoben.

An dieser Stelle sei ausdrücklich darauf hingewiesen, dass unter einer Getriebe-Schaltassistenzvorrichtung im Sinne der Erfindung keine Synchronisationseinrichtung für ein Getriebe zu verstehen ist; eine Getriebe-Schaltassistenzvorrichtung dient lediglich dazu, einen Schaltwunsch des Fahrers über eine Sensoreinrichtung zu erfassen und ein entsprechendes elektronisches Signal an eine Motorsteuerung bzw. eine Motorelektronik zu übermitteln.

Nachteilig bei bekannten Getriebe-Schaltassistenzvorrichtungen ist, dass die Druckfeder bzw. die Druckfedern relativ steif ausgebildet werden müssen, um eine präzise Leerlauffindung zu ermöglichen, da beim Einlegen des Leerlaufs die Getriebe-Schaltassistenzvorrichtung gerade nicht ansprechen soll, sondern als Ganzes, d. h. ohne Relativbewegung zwischen Kolben und Gehäuse, bewegt werden muss. Daher müssen die Druckfedern in der Getriebe-Schaltassistenzvorrichtung eine genügend hohe Federhärte aufweisen, dass aus einer Neutralstellung heraus die Kraft zum Komprimieren der Druckfedern größer ist als die im Getriebe notwendige Kraft, um den Leerlauf einzulegen. Als Folge davon steigt die vom Fahrer beim weiteren Komprimieren (wie es bei jedem Schaltvorgang der Fall ist) gegen die Druckfedern aufzubringende Kraft noch weiter an, obwohl dies für den eigentlichen Schaltvorgang nicht erforderlich wäre. Dieses Kraftniveau wird von vielen Fahrern als schwergängig und unkomfortabel empfunden.

Es ist daher Aufgabe der Erfindung, eine Getriebe-Schaltassistenzvorrichtung bzw. eine Schalteinrichtung für ein Motorrad bereitzustellen, die die genannten Nachteile vermeidet.

Erfindungsgemäß ist hierzu bei einer Getriebe-Schaltassistenzvorrichtung der eingangs genannten Art eine separat von der Druckfeder oder den Druckfedern ausgebildete Verriegelungseinrichtung vorgesehen, die den Kolben unterhalb einer vorgegebenen, auf den Kolben oder das Gehäuse ausgeübten Entriegelungskraft relativ zum Gehäuse in einer Neutralstellung festlegt. Die Verriegelungseinrichtung verhindert also bis zum Überschreiten der vorgegebenen Entriegelungskraft eine Relativbewegung zwischen Kolben und Gehäuse und somit ein Ansprechen der Getriebe-Schaltassistenzvorrichtung. Unterhalb der vorgegebenen Entriegelungskraft wird somit die Getriebe-Schaltassistenzvorrichtung als Ganzes bewegt, wodurch der Leerlauf eingelegt werden kann. Zum Schalten selbst wird die Kraft vom Fahrer gesteigert, wobei sich bei Überschreiten der vorgegebenen Kraftschwelle die Verriegelungseinrichtung löst, die Schaltassistenzvorrichtung betätigt wird und die Schaltung durchgeführt wird. Da folglich bei der erfindungsgemäßen Getriebe-Schaltassistenzvorrichtung die Verriegelungseinrichtung eine sichere Leerlauffindung gewährleistet, können die Druckfedern bzw. die Druckfeder in der Getriebe-Schaltassistenzvorrichtung für die Schaltung selbst deutlich weicher gestaltet werden. Die erfindungsgemäße Getriebe-Schaltassistenzvorrichtung sorgt somit für einen gesteigerten Fahrkomfort, da sich für den Fahrer beim Schalten der Gänge deutlich geringere Kräfte als bisher ergeben, ohne dass auf eine präzise Leerlauffindung verzichtet werden muss.

Gemäß einer bevorzugten Ausführungsform sind zwei Druckfedern vorgesehen, die zu beiden Seiten des Kolbens im Gehäuse angeordnet sind, insbesondere wobei der Kolben in seiner Neutralstellung in Axialrichtung etwa mittig im Gehäuse angeordnet ist. Dabei können die beiden Druckfedern mit unterschiedlichen Federkennlinien ausgebildet sein, was in der Praxis vor allem deshalb von Vorteil sein kann, da Untersuchungen gezeigt haben, dass das Ziehen eines Fußschalthebels nach oben wesentlich feinfühliger möglich ist als das Drücken eines Fußschalthebels nach unten. Daher ist es vorteilhaft, wenn die Federkennlinie in der ersten Schaltrichtung (d. h. nach oben) weicher als in der zweiten Schaltrichtung (d. h. nach unten) ist.

Alternativ ist es natürlich auch möglich, nur eine einzige Druckfeder vorzusehen, wodurch sich ein besonders geringer Bauraumbedarf ergibt.

Eine besonders zuverlässige und dennoch einfache und damit kostengünstige Ausgestaltung lässt sich erzielen, wenn die Verriegelungseinrichtung eine Verriegelungsfeder sowie ein von der Verriegelungsfeder beaufschlagtes Verriegelungselement aufweist.

Bevorzugt ist die Verriegelungsfeder eine Spiralfeder, die sich einfach und preiswert herstellen lässt.

Vorzugsweise ist das Verriegelungselement eine Kugel, die aufgrund ihrer Geometrie ein einfaches Lösen bei entsprechender Kraftbeaufschlagung ermöglicht.

In einer bevorzugten Ausführungsform weist der Kolben eine Ausnehmung auf, in der die Verriegelungsfeder und das Verriegelungselement angeordnet sind, wobei die Verriegelungsfeder bestrebt ist, das Verriegelungselement aus der Ausnehmung in eine gehäusefeste Verriegelungsausnehmung zu drücken. Dies lässt sich fertigungstechnisch einfach realisieren.

Alternativ können die Verriegelungsfeder und das Verriegelungselement in einer Ausnehmung im Gehäuse angeordnet sein, wobei dann die Verriegelungsfeder das Verriegelungselement in eine Ausnehmung am Kolben drückt.

Insbesondere erstreckt sich eine Längsachse der Ausnehmung senkrecht zur Verschiebungsrichtung des Kolbens. Dies ermöglicht ein Entriegeln bei gleicher Kraft in beiden Verschieberichtungen des Kolbens relativ zum Gehäuse.

Um den Kolben unterhalb der vorgegebenen Entriegelungskraft sicher im Gehäuse festzulegen, ragt das Verriegelungselement in der Neutralstellung zumindest teilweise aus der Ausnehmung heraus und erstreckt sich in die Verriegelungsausnehmung, um einen Formschluss zu bilden.

Vorzugsweise weist eine Umfangswand des Gehäuses die Verriegelungsausnehmung auf, in die das Verriegelungselement in der Neutralstellung zumindest teilweise eingreift.

Gemäß einer bevorzugten Ausführungsform sind die zumindest eine Druckfeder und die Verriegelungsfeder sowie die Geometrie des Verriegelungselements und die der Verriegelungsausnehmung so aufeinander abgestimmt, dass die axiale Verschiebekraft zum Herausbewegen des Verriegelungselements aus der Verriegelungsausnehmung größer als die anschließend aufzubringende Verschiebekraft zum Verschieben des Kolbens gegen die zumindest eine Druckfeder ist. Dadurch ist eine präzise Leerlauffindung gewährleistet, wobei sich für den Fahrer beim Schalten der Gänge deutlich geringere Kräfte als bisher ergeben.

In einer Weiterbildung der Erfindung ist am Kolben ein erster Teil einer Sensoranordnung vorgesehen, der mit einem am Gehäuse vorgesehenen zweiten Teil zusammenwirkt, wodurch eine Relativbewegung zwischen Gehäuse und Kolben erfasst werden kann. Insbesondere handelt es sich dabei um einen berührungslosen magnetischen Sensor. Natürlich kann die Sensoranordnung auch an anderer Stelle angeordnet werden, etwa an einer mit dem Kolben verbundenen Kolbenstange.

Die erfindungsgemäße Getriebe-Schaltassistenzvorrichtung findet insbesondere in einer Schalteinrichtung für ein Motorrad Verwendung, mit einem per Fuß in eine erste Schaltrichtung oder in eine der ersten Schaltrichtung entgegengesetzte zweite Schaltrichtung betätigbaren Schalthebel, der über die Getriebe-Schaltassistenzvorrichtung mit einem Schalteingang eines Motorradgetriebes gekoppelt ist, wobei die Getriebe-Schaltassistenzvorrichtung ein Schalten bei geschlossener Kupplung ermöglicht. Eine solche Schalteinrichtung sorgt für einen gesteigerten Fahrkomfort, da sich für den Fahrer beim Schalten der Gänge deutlich geringere Kräfte als bisher ergeben, ohne dass auf eine präzise Leerlauffindung verzichtet werden muss.

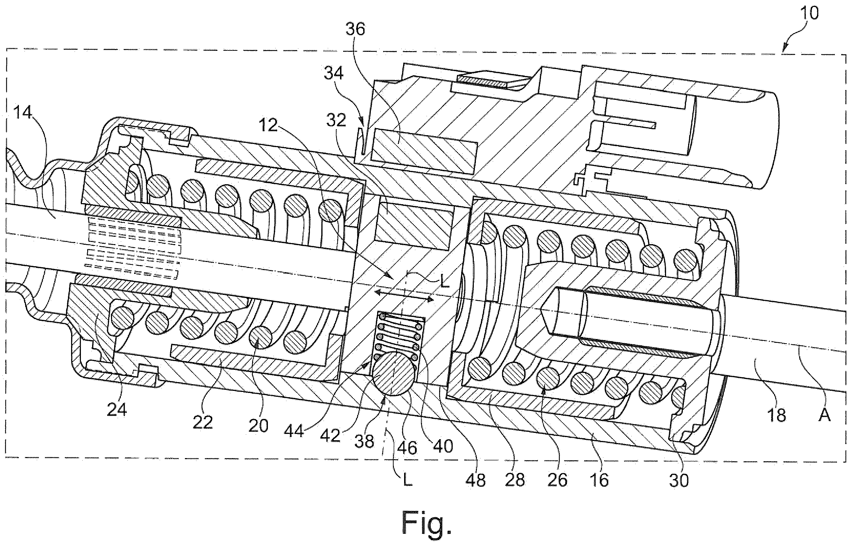

Weitere Merkmale und Vorteile ergeben sich aus der nachfolgenden Beschreibung einer bevorzugten Ausführungsform anhand der beigefügten Zeichnung.

In dieser zeigt die einzige Figur eine Schnittansicht einer Getriebe-Schaltassistenzvorrichtung, die in einer Schalteinrichtung für ein Motorrad eingesetzt wird.

Die Figur zeigt eine erfindungsgemäße Getriebe-Schaltassistenzvorrichtung 10 (auch als Schaltassistent bezeichnet) für eine Schalteinrichtung für ein Motorrad. Die Getriebe-Schaltassistenzvorrichtung 10 weist einen Kolben 12 auf, der mit einer Kolbenstange 14 verbunden ist. Der Kolben 12 ist verschieblich in einem Gehäuse 16 angeordnet, das fest mit einer Gehäusestange 18 verbunden ist. Die Figur zeigt den Kolben 12 in seiner Neutralstellung, in der er in Axialrichtung A etwa mittig im Gehäuse 16 angeordnet ist.

Das in der Figur nicht gezeigte zweite Ende der Kolbenstange 14 dient der Anbindung des Kolbens 12 an das Getriebe des Motorrads, während das ebenfalls nicht dargestellte zweite Ende der Gehäusestange 18 der Anbindung des Gehäuses 16 an den Fußschalthebel des Motorrads dient. Alternativ ist es natürlich auch möglich, den Kolben 12 mit dem Schalthebel zu koppeln, und das Gehäuse 16 mit dem Getriebeeingang des Motorrads. Die Getriebe-Schaltassistenzvorrichtung 10 ist also als Schaltkraftübertragungseinrichtung zwischen dem Schalthebel und dem Getriebeeingang des Motorrads angeordnet.

Auf der der Kolbenstange 14 zugewandten Seite des Kolbens 12 ist eine erste Druckfeder 20 im Gehäuse 16 angeordnet, die sich an der linken Seite des Kolbens 12, insbesondere an einem dort vorgesehenen Führungselement 22, abstützt. Das andere Ende der Druckfeder 20 stützt sich an einem Gehäusedeckel 24 ab. Auf der der Gehäusestange 18 zugewandten Seite des Kolbens 12 ist eine zweite Druckfeder 26 im Gehäuse 16 angeordnet, die sich ebenfalls an einem am Kolben 12 vorgesehenen Führungselement 28 sowie auf der anderen Seite an einem Gehäusedeckel 30 abstützt.

Am Kolben 12 ist ein erster Teil 32 einer Sensoranordnung 34 vorgesehen, der mit einem am Gehäuse 16 vorgesehenen zweiten Teil 36 zusammenwirkt, der über ein nicht gezeigtes Anschlusskabel mit einer Motorelektronik verbunden ist. Insbesondere handelt es sich um einen berührungslosen magnetischen Sensor, etwa einen Hall-Sensor.

Weiterhin ist eine Verriegelungseinrichtung 38 vorgesehen, die separat von den Druckfedern 20, 26 ausgebildet ist. Die Verriegelungseinrichtung 38 weist eine als Spiralfeder ausgebildete Verriegelungsfeder 40 sowie ein von der Verriegelungsfeder 40 beaufschlagtes Verriegelungselement 42 in Form einer Kugel auf.

Sowohl die Verriegelungsfeder 40 als auch das Verriegelungselement 42 sind in einer zylindrischen Ausnehmung 44 des Kolbens 12 angeordnet, deren Längsachse L sich senkrecht zur Verschiebungsrichtung des Kolbens 12, die der Axialrichtung A entspricht, erstreckt. Dabei drückt die Verriegelungsfeder 40 das Verriegelungselement 42 teilweise aus der Ausnehmung 44 in eine annähernd halbkugelförmige Verriegelungsausnehmung 46, die in einer Umfangswand 48 des Gehäuses 16 ausgebildet ist.

In der in der Figur gezeigten Neutralstellung greift das Verriegelungselement 42 also zumindest teilweise in die Verriegelungsausnehmung 46 ein bzw. erstreckt sich in diese, um einen Formschluss zu bilden. Dadurch ist der Kolben 12 relativ zum Gehäuse 16 in der Neutralstellung festgelegt, solange nicht eine vorgegebene Entriegelungskraft in Axialrichtung A auf den Kolben 12 bzw. das Gehäuse 16 ausgeübt wird, die ausreicht, um die Verriegelungseinrichtung 38 zu lösen.

Hierbei sind die Druckfedern 20, 26 und die Verriegelungsfeder 40 sowie die Geometrie des Verriegelungselements 42 und die der Verriegelungsausnehmung 46 in der Umfangswand 48 des Gehäuses 16 so aufeinander abgestimmt, dass die axiale Verschiebekraft, die zum Herausbewegen des Verriegelungselements 42 aus der Verriegelungsausnehmung 46 nötig ist, größer ist als die anschließend aufzubringende Verschiebekraft zum Verschieben des Kolbens 12 gegen die Druckfeder 20 bzw. 26.

Soll nun beim Motorrad der Leerlauf eingelegt werden, so übt der Fahrer auf den Fußschalthebel eine Kraft aus, die geringer als die vorgegebene Entriegelungskraft der Verriegelungseinrichtung 38 ist, sodass die Schaltassistenzvorrichtung 10 sich als Ganzes bewegt und im Getriebe der Leerlauf eingelegt wird.

Möchte der Fahrer hingegen in einen höheren Gang schalten, so zieht er den Fußschalthebel mit einer entsprechend größeren Kraft nach oben (diese wird erzwungen durch das Motormoment, welches die Schaltwalze, den Getriebeschalthebel und letztlich die Gehäusestange 18 blockiert, bis die Motorsteuerung das Moment reduziert), sodass die über die Gehäusestange 18 auf das Gehäuse 16 (bzw. den Kolben 12) ausgeübte axiale, nach links gerichtete Verschiebekraft das Verriegelungselement 42 gegen die Vorspannung der Verriegelungsfeder 40 aus der Verriegelungsausnehmung 46 heraus komplett in die Ausnehmung 44 des Kolbens 12 drückt, wodurch erst die Relativbewegung zwischen Kolben 12 und Gehäuse 16 ermöglicht wird.

Beim Hochschalten wird das Gehäuse 16 der Schaltassistenzvorrichtung 10 durch den über die Gehäusestange 18 aufgebrachten Druck ebenfalls auf Druck belastet, was zu einer Kompression der Druckfeder 26 führt. Die Kolbenstange 14 schiebt sich ins Gehäuse und nimmt den Kolben 12 mit nach rechts, was durch die gehäusefeste Sensoranordnung 34 registriert und an die Motorelektronik übermittelt wird. Diese erkennt einen Hochschaltwunsch des Fahrers und senkt kurzzeitig das Antriebsmoment des Motors ab, was dann ein (Hoch-)Schalten ohne Betätigung der Kupplung ermöglicht. Die Feder 26 sorgt anschließend wieder für die Verschiebung in Neutralstellung.

In umgekehrter Schaltrichtung funktioniert die Schaltassistenzvorrichtung 10 analog. Möchte der Fahrer herunterschalten, so drückt er den Fußschalthebel aus der Neutralstellung nach unten, und zwar wiederum mit einer Kraft, die ausreicht, um die Verriegelungseinrichtung 38 zu lösen, indem das Verriegelungselement 42 gegen die Verriegelungsfeder 40 so weit in die Ausnehmung 44 des Kolbens 12 hinein bewegt wird, dass der Kolben 12 nicht länger relativ zum Gehäuse 16 festgelegt ist. Die Bewegungsabläufe der anderen Teile können wie folgt beschrieben werden.

Die nach links wandernde Stange 14 nimmt das Führungselement 22 und den Kolben 12 mit nach links, was zum Einfedern der Druckfeder 20 führt. Die Druckfeder 26 federt nach links aus und drückt über das Führungselement 28 den Kolben 12 und das Teil 32 nach links.

Die Relativverschiebung zwischen Kolben 12 und Gehäuse 16 wird von der Motorelektronik als Schaltwunsch des Fahrers zum Herunterschalten in einen niedrigeren Gang interpretiert. Wieder wird das Antriebsmoment des Motors kurzzeitig abgesenkt und so ein Herunterschalten ohne Betätigung der Kupplung ermöglicht. Die Federn 20, 26 sorgen anschließend wieder für die Neutralstellung.

Da die Druckfedern 20, 26 gegenüber den Druckfedern von aus dem Stand der Technik bekannten Schaltassistenzvorrichtungen eine deutlich geringere Federhärte aufweisen, ist das Schalten für den Fahrer bei der erfindungsgemäßen Schaltassistenzvorrichtung 10 deutlich komfortabler. Eine präzise Leerlauffindung ist dennoch durch die Verriegelungseinrichtung 38 gegeben.

In einer Weiterbildung kann vorgesehen sein, dass die beiden Druckfedern 20, 26 unterschiedliche Federkennlinien aufweisen.

## Patentansprüche

1. Getriebe-Schaltassistenzvorrichtung, insbesondere für ein Motorrad, die dazu ausgebildet ist, einen Schaltwunsch des Fahrers über eine Sensoreinrichtung zu erfassen und ein entsprechendes elektronisches Signal an eine Motorsteuerung bzw. eine Motorelektronik zu übermitteln, mit einem Gehäuse (16), einem im Gehäuse (16) angeordneten Kolben (12) sowie wenigstens einer im Gehäuse (16) vorgesehenen Druckfeder (20, 26), wobei der Kolben (12) unter Kompression wenigstens einer Druckfeder (20, 26) relativ zum Gehäuse (16) verschieblich ist, **dadurch gekennzeichnet, dass** eine separat von der Druckfeder oder den Druckfedern (20, 26) ausgebildete Verriegelungseinrichtung (38) vorgesehen ist, die den Kolben (12) unterhalb einer vorgegebenen, auf den Kolben (12) oder das Gehäuse (16) ausgeübten Entriegelungskraft relativ zum Gehäuse (16) in einer Neutralstellung festlegt.

2. Getriebe-Schaltassistenzvorrichtung nach Anspruch 1, **dadurch gekennzeichnet, dass** zwei Druckfedern (20, 26) vorgesehen sind, die zu beiden Seiten des Kolbens (12) im Gehäuse (16) angeordnet sind, insbesondere wobei der Kolben (12) in seiner Neutralstellung in Axialrichtung (A) etwa mittig im Gehäuse (16) angeordnet ist.

3. Getriebe-Schaltassistenzvorrichtung nach Anspruch 1 oder 2, **dadurch gekennzeichnet, dass** die Verriegelungseinrichtung (38) eine Verriegelungsfeder (40) sowie ein von der Verriegelungsfeder (40) beaufschlagtes Verriegelungselement (42) aufweist.

4. Getriebe-Schaltassistenzvorrichtung nach Anspruch 3, **dadurch gekennzeichnet, dass** die Verriegelungsfeder (40) eine Spiralfeder ist.

5. Getriebe-Schaltassistenzvorrichtung nach Anspruch 3 oder 4, **dadurch gekennzeichnet, dass** das Verriegelungselement (42) eine Kugel ist.

6. Getriebe-Schaltassistenzvorrichtung nach einem der Ansprüche 3 bis 5, **dadurch gekennzeichnet, dass** der Kolben (12) eine Ausnehmung (44) aufweist, in der die Verriegelungsfeder (40) und das Verriegelungselement (42) angeordnet sind, wobei die Verriegelungsfeder (40) bestrebt ist, das Verriegelungselement (42) aus der Ausnehmung (44) in eine gehäusefeste Verriegelungsausnehmung (46) zu drücken.

7. Getriebe-Schaltassistenzvorrichtung nach Anspruch 6, **dadurch gekennzeichnet, dass** sich eine Längsachse (L) der Ausnehmung (44) senkrecht zur Verschiebungsrichtung des Kolbens (12) erstreckt.

8. Getriebe-Schaltassistenzvorrichtung nach Anspruch 6 oder 7, **dadurch gekennzeichnet, dass** sich das Verriegelungselement (42) in der Neutralstellung zumindest teilweise aus der Ausnehmung (44) heraus und in die Verriegelungsausnehmung (46) erstreckt, um einen Formschluss zu bilden.

9. Getriebe-Schaltassistenzvorrichtung nach einem der Ansprüche 6 bis 8, **dadurch gekennzeichnet, dass** eine Umfangswand (48) des Gehäuses (16) die Verriegelungsausnehmung (46) aufweist, in die das Verriegelungselement (42) in der Neutralstellung zumindest teilweise eingreift.

10. Getriebe-Schaltassistenzvorrichtung nach einem der Ansprüche 6 bis 10, **dadurch gekennzeichnet, dass** die zumindest eine Druckfeder (20, 26) und die Verriegelungsfeder (40) sowie die Geometrie des Verriegelungselements (42) und die der Verriegelungsausnehmung (46) so aufeinander abgestimmt sind, dass die axiale Verschiebekraft zum Herausbewegen des Verriegelungselements (42) aus der Verriegelungsausnehmung (46) größer als die anschließend aufzubringende Verschiebekraft zum Verschieben des Kolbens (12) gegen die zumindest eine Druckfeder (20, 26) ist.

11. Getriebe-Schaltassistenzvorrichtung nach einem der vorhergehenden Ansprüche, **dadurch gekennzeichnet, dass** am Kolben (12) ein erster Teil (32) einer Sensoranordnung (34) vorgesehen ist, der mit einem am Gehäuse (16) vorgesehenen zweiten Teil (36) zusammenwirkt, wodurch eine Relativbewegung zwischen Gehäuse (16) und Kolben (12) erfasst werden kann.

12. Schalteinrichtung für ein Motorrad, mit einem per Fuß in eine erste Schaltrichtung oder in eine der ersten Schaltrichtung entgegengesetzte zweite Schaltrichtung betätigbaren Schalthebel, der über eine Getriebe-Schaltassistenzvorrichtung (10) nach einem der Ansprüche 1 bis 11 mit einem Schalteingang eines Motorradgetriebes gekoppelt ist, wobei die Getriebe-Schaltassistenzvorrichtung (10) ein Schalten bei geschlossener Kupplung ermöglicht.

## Claims

1. A transmission shift assistance device, especially for a motorcycle, which is designed to detect the driver's shift intention by way of a sensor means and to transmit a corresponding electronic signal to an engine control unit or motor electronics, with a housing (16), a piston (12) arranged in the housing (16) and also at least one compression spring (20, 26) provided in the housing (16), wherein the piston (12) is displaceable relative to the housing (16), compressing at least one compression spring (20, 26), **characterised in that** a locking means (38) formed separately from the compression spring or compression springs (20, 26) is provided which below a specified unlocking force exerted on the piston (12) or the housing (16) fixes the piston (12) in a neutral position relative to the housing (16).

2. A transmission shift assistance device according to Claim 1, **characterised in that** two compression springs (20, 26) are provided which are arranged on either side of the piston (12) in the housing (16), especially wherein the piston (12) in its neutral position in the axial direction (A) is arranged approximately centrally in the housing (16).

3. A transmission shift assistance device according to Claim 1 or Claim 2, **characterised in that** the locking means (38) has a locking spring (40) and also a locking element (42) acted on by the locking spring (40).

4. A transmission shift assistance device according to Claim 3, **characterised in that** the locking spring (40) is a coil spring.

5. A transmission shift assistance device according to Claim 3 or Claim 4, **characterised in that** the locking element (42) is a ball.

6. A transmission shift assistance device according to one of Claims 3 to 5, **characterised in that** the piston (12) has a recess (44) in which the locking spring (40) and the locking element (42) are arranged, the locking spring (40) attempting to press the locking element (42) out of the recess (44) into a locking recess (46) in the housing.

7. A transmission shift assistance device according to Claim 6, **characterised in that** a longitudinal axis (L) of the recess (44) extends perpendicularly to the direction of displacement of the piston (12).

8. A transmission shift assistance device according to Claim 6 or Claim 7, **characterised in that** the locking element (42) in the neutral position extends at least partially out of the recess (44) and into the locking recess (46) in order to form a form-fit.

9. A transmission shift assistance device according to one of Claims 6 to 8, **characterised in that** a peripheral wall (48) of the housing (16) has the locking recess (46) into which the locking element (42) at least partially engages in the neutral position.

10. A transmission shift assistance device according to one of Claims 6 to 10, **characterised in that** the at least one compression spring (20, 26) and the locking spring (40) and also the geometry of the locking element (42) and that of the locking recess (46) are matched to one another such that the axial displacement force for moving the locking element (42) out of the locking recess (46) is greater than the displacement force then to be applied for displacing the piston (12) counter to the at least one compression spring (20, 26).

11. A transmission shift assistance device according to one of the preceding claims, **characterised in that** a first part (32) of a sensor arrangement (34) is provided on the piston (12), which part cooperates with a second part (36) provided on the housing (16), by means of which a relative movement between the housing (16) and piston (12) can be detected.

12. A shift means for a motorcycle, with a shift lever which can be actuated by foot into a first shifting direction or into a second shifting direction opposed to the first shifting direction, which lever is coupled by way of a transmission shift assistance device (10) according to one of Claims 1 to 11 with a shift input of a motorcycle transmission, wherein the transmission shift assistance device (10) permits shifting when the coupling is closed.

## Revendications

1. Dispositif d'assistance de commutation d'une boîte de vitesses, destiné en particulier à un motocycle qui est réalisé pour permettre de détecter un souhait de changement de vitesse du conducteur par l'intermédiaire d'un dispositif de capteurs, et de transmettre un signal électronique correspondant à une commande ou à un système électronique du moteur, comprenant un boîtier (16), un piston (12) installé dans le boîtier (16) ainsi qu'au moins un ressort de pression (20, 26) situé dans le boîtier (16),
le piston (12) pouvant être déplacé par translation par rapport au boîtier (16) par compression d'au moins un ressort de pression (20, 26), **caractérisé en ce qu'**
il est prévu un dispositif de verrouillage (38) réalisé séparément du ou des ressort(s) de pression (20, 26), qui fixe le piston (12) dans une position neutre par rapport au boîtier (16), au-dessous d'une force de déverrouillage prédéterminée exercée sur le piston (12) ou le boîtier (16).

2. Dispositif d'assistance de commutation d'une boîte de vitesses conforme à la revendication 1,
**caractérisé en ce qu'**
il est prévu deux ressorts de pression (20, 26) qui sont installés des deux côtés du piston (12) dans le boîtier (16) et en particulier, dans sa position neutre, le piston (12) est situé en position axiale (A) essentiellement au milieu du boîtier (16).

3. Système d'assistance de commutation d'une boîte de vitesses conforme à la revendication 1 ou 2,
**caractérisé en ce que**
le dispositif de verrouillage (38) comporte un ressort de verrouillage (40) ainsi qu'un élément de verrouillage (42) sollicité par le ressort de verrouillage (40).

4. Dispositif d'assistance de commutation d'une boîte de vitesses conforme à la revendication 3,
**caractérisé en ce que**
le ressort de verrouillage (40) est un ressort hélicoïdal.

5. Dispositif d'assistance de commutation d'une boîte de vitesses conforme à la revendication 3 ou 4,
**caractérisé en ce que**
l'élément de verrouillage (42) est une sphère.

6. Dispositif d'assistance de commutation d'une boîte de vitesses conforme à l'une des revendications 3 à 5,
**caractérisé en ce que**
le piston (12) comporte un évidement (44) dans lequel sont installés le ressort de verrouillage (40) et l'élément de verrouillage (42), le ressort de verrouillage (40) tendant à pousser l'élément de verrouillage (42) en dehors de l'évidement (44), dans un évidement de verrouillage (46) solidaire du boîtier.

7. Dispositif d'assistance de commutation d'une boîte de vitesses conforme à la revendication 6,
**caractérisé en ce que**
l'axe longitudinal (L) de l'évidement (44) s'étend perpendiculairement à la direction de coulissement du piston (12).

8. Dispositif d'assistance de commutation d'une boîte de vitesses conforme à la revendication 6 ou 7,
**caractérisé en ce que**
dans la position neutre, l'élément de verrouillage (42) s'étend au moins partiellement en dehors de l'évidement (44), et dans l'évidement de verrouillage (46) pour former une liaison par la forme.

9. Dispositif d'assistance de commutation d'une boîte de vitesses conforme à l'une des revendications 6 à 8,
**caractérisé en ce que**
la paroi périphérique (48) du boîtier (16) comporte l'évidement de verrouillage (46) dans lequel vient en prise au moins partiellement l'élément de verrouillage (42) dans la position neutre.

10. Dispositif d'assistance de commutation d'une boîte de vitesses conforme à l'une des revendications 6 à 9,
**caractérisé en ce que**
le ressort de pression (20, 26) et le ressort de verrouillage (40) ainsi que les géométries de l'élément de verrouillage (42) et de l'évidement de verrouillage (46) sont ajustés de sorte que la force de translation axiale permettant de faire sortir l'élément de verrouillage (42) de l'évidement de verrouillage (46) soit supérieure à la force de translation devant être exercée ensuite pour faire coulisser le piston (12), contre le ressort de pression (20, 26).

11. Dispositif d'assistance de commutation d'une boîte de vitesses conforme à l'une des revendications précédentes,
**caractérisé en ce qu'**
il est prévu sur le piston (12) une première partie (32) d'un dispositif de capteurs (34) qui coopère avec une seconde partie (36) située sur le boîtier (16) de sorte qu'un déplacement relatif entre le boîtier (16) et le piston (12) puisse être détecté.

12. Dispositif de changement de vitesse destiné à un motocycle comportant un levier de changement de vitesse pouvant être manœuvré au pied dans une première direction de commutation ou dans une seconde direction de commutation opposée à celle-ci, qui est couplé par l'intermédiaire d'un dispositif d'assistance de commutation d'une boîte de vitesses (10) conforme à l'une des revendications 1 à 11, avec une entrée de commutation de la boîte de vitesses du motocycle, le dispositif d'assistance de commutation de la boîte de vitesses (10) permettant d'effectuer un changement de vitesse lorsque l'embrayage est fermé.
